# EUROPEAN PATENT SPECIFICATION

(11) **EP 2 085 775 B1**
(45) Date of publication and mention of the grant of the patent: **19.08.2015**
(21) Application number: 06116578.3
(22) Date of filing: 04.07.2006
(51) Int. Cl.: G01N 30/88

(54) **Hosting a module in an analysis system**
Unterbringung eines Moduls in einer Analysevorrichtung
Hébergement d'un module dans un système d'analyse

(43) Date of publication of application: 05.08.2009
(73) Proprietor: Agilent Technologies, Inc., Santa Clara CA 95051 (US)
(72) Inventor: Prasse, Klaus, 76137 Karlsruhe (DE); Wetzel, Matthias, 76829 Landau (DE); Lorinser, Andreas, 75395 Ostelsheim (DE); Herzog, Philip, 76297 Stutensee (DE); Steinmetz, Sven, 76133 Karlsruhe (DE); Anderer, Herbert, 76337 Waldbronn (DE)
(74) Representative: Barth, Daniel Mathias

(56) References cited:
- EP-A2- 0 822 405

## Description

The present invention relates to an analysis system for performing an analysis, the analysis having a modular structure connected via a network in which individual modules interact so as to perform the analysis and comprising a hosted module and a plurality of hosting modules, wherein each module has the capability of providing or contributing to a specific function to the analysis system, and a further entity having the capability of monitoring or controlling or supervising a function or a partial function of the analysis system.

### BACKGROUND ART

Known analysis systems are formed by a plurality of networked modules being controlled by a central control device. Such an analysis device allows to carry out an analysis and may comprise a user interface allowing to control the analysis and to read out measurement results as analysis data.

Such a system is disclosed in EP 1 469 301 A1 by the same applicant Agilent Technologies.

EP 0 822 405 A2 discloses an optical illuminator assembly for an analytical instrument, such as a clinical hematology or a flow cytometer. The illuminator assembly comprises a plurality of optical components, such as a laser source, a spatial filter, a beam shaping aperture, and a focusing lens. The optical components are mounted in or to a housing and are internally oriented with respect to the housing to produce a focused laser beam output. The housing is in turn mounted on an alignment mechanism which can move the focused beam in four degrees of freedom, thereby ti direct the focused beam to a particular location. Thus, a factory alignment and a low cost prealigned optical illuminator assembly is obtained, which can be easily oriented for use in an instrument. The illumionator assembly has a central intelligence, which implemented as an analytical instrument controller, which fully controls the operation of all peripheral devices, which might provide some measuring tasks in the instrument. EP 0 822 405 A2 does not disclose a modular structure, wherein individual modules interact so as to perform an analysis. Rather, all operation is controlled by the analytic instrument controller, and no intertaction between individual modules is required to perform or contribute to a specific function or any kind of analysis.

### SUMMARY OF THE INVENTION

It is an object of the invention to provide an analysis system having a modular structure and comprising a hosted module and a plurality of hosting modules, wherein each module has the capability of providing or contributing to a specific function to the analysis system, in which at least some of the hosted modules are allowed to be manufactured at low cost and with reduced resources and therefore reduced complexity as compared to other modules, and which is operable in an efficient manner. The object is solved in a first aspect by an analysis system according to the independent claim 1 and in a second aspect by a method of operating an analysis system according to the independent claim 13. Further embodiments are shown by the dependent claims.

According to the first aspect, there is provided an analysis system for performing an analysis and having a modular structure connected via a network in which individual modules interact so as to perform the analysis. The analysis system comprises a hosted module and a plurality of hosting modules, wherein each module has the capability of providing or contributing to a specific function to the analysis system. The analysis system further comprises a further entity, which has the capability of monitoring or controlling or supervising a function or a partial function of the analysis system. The hosted module alone is not capable to serve as an independent network node in the analysis system. On the other hand, each hosting module has the capability to act as a master to enable the hosted module to appear as an independent network node in the analysis system. Each hosting module comprises a hosted module processing unit adapted for communicating with the further entity and with the hosted module with respect to the specific function of the hosted module in the analysis system. In the analysis system, one of the plurality of hosting modules is selected for hosting the hosted module.

The hosting module may be an independently operable module for a life science analysis system which module has the partial function to support operation of another non-independent module for the life science analysis system. The hosted module may be a module for a life science analysis system which module may only be operable in the system when being supported by another independent module for the life science analysis system. The further entity may be a control device for controlling the analysis system, for instance a server for centrally controlling a networked life science analysis system formed by a plurality of interconnected modules. The hosting module processing unit may be a software and/or hardware component, and may be adapted for communicating with the further entity with respect to a function of the hosting module in the analysis system. A function of the hosted module in the analysis system may be a valve function of the hosted module in a liquid chromatography analysis system. A function of the hosting module in the analysis system may be a detection function of the hosting module in a liquid chromatography analysis system.

The hosted module may comprise a hosting module interface unit adapted for communicating with the hosting module adapted for communicating with the further entity with respect to a function of the hosted module in the analysis system, and a hosted module function unit adapted for providing the function of the hosted module in the analysis system.

According ot the second aspect, there is provided a method of operating an analysis system for performing an analysis, the method comprising: providing an analysis system according to the first aspect; selecting one of the plurality of hosting modules for hosting the hosted module; and the selected hosting module acting as a master to enable the hosted module to appear as an independent network node in the analysis system, by communicating with the further entity and with the hosted module with respect to the specific function of the hosted module in the analysis system.

The method may further comprise communicating between the hosting module and the control device with respect to a function of the hosting module provided by the hosting module in the analysis system, communicating between the hosting module and the hosted module with respect to a function of the hosted module provided by the hosted module in the analysis system, and communicating between the hosting module and the further entity with respect to the function of the hosted module in the analysis system provided by the hosted module.

The term "further entity" denotes any network node or component of the analysis system which may monitor or control or supervise a (partial) function of the analysis system, which (partial) function may be provided by the hosting module, the hosted module, or one or a plurality of other modules of the analysis system. For example, the further entity may be a control device for controlling the hosting module and the hosted module (or the entire analysis system), may be a further hosting module, or may be a further hosted module.

The term "analysis system" denotes any system with a modular structure connected via a network in which individual modules interact so as to perform the analysis. As such, an analysis system may be adapted as a measurement device for performing a measurement in a coupled measurement environment, a measurement device for measuring at least one physical, chemical or biological parameter, a measurement device for performing a measurement of a fluidic sample, a sensor device, a device for chemical, biological and/or pharmaceutical analysis, a fluid separation system adapted for separating components of a fluid, a test device for testing a device under test or a substance, a capillary electrophoresis device, a liquid chromatography device, a gas chromatography device, an electronic measurement device, a mass spectroscopy device, and a life science apparatus. For instance, the analysis system may be an analysis system in the field of life science, particularly for measuring physical parameters, for instance for separating components of a fluidic sample implementing a fluidic device. In such an embodiment, the analysis system may comprise a plurality of modules like a detector, a sampler, a pump, a handheld device/PC as a control instance, valves, etc.

The term "hosting module" denotes a module in such an analysis system which has the capability of providing or contributing to a specific function to the analysis system (for instance a detection function in the case of a detection module), and which, in addition, has the capability to act as a master to enable the hosted module to appear as an independent network node in the analysis system. Accordingly, a hosting module may have the capability to act as a kind of master to enable a dependent slave module to appear as a module or network node in the analysis system only with the assistance of the hosting module. Therefore, a hosting module may be a module which fulfils its own function and additionally works as some kind of interface or translating instance between the control device and a hosted module. The hosting module may intermediate between the control device and the hosted module to enable the control device to communicate with the hosted module (only) via the hosting module in a manner that the control device does not recognize that an entity translates communication messages between the control device and the hosted module.

The term "hosted module" denotes a dependent module or a local module, which has the capability of monitoring or controlling or supervising a function or a partial function of the analysis system and which is not capable to serve (or to be visible) as an independent network node, particularly without the presence of a hosting module hosting the hosted module.. Therefore, the hosted module may be manufactured with reduced resources (compared to a hosting module) and therefore reduced complexity in its construction, allowing to construct the hosted module with low cost. However, in order to function as a quasi separate network node in the analysis network, the hosted module needs the drive or control or interface capabilities of the assigned hosting module.

The term "to host" may particularly denote to control or supervise another module in a manner that the hosted module is fully operable in an analysis network only due to the hosting service rendered available by the hosting module. Therefore, in the absence of a hosting instance, a non-autonomous module of the analysis network may be not capable of being operated independently to contribute its function to the analysis system.

A hosting module may have some network capabilities and may be operable autonomously and independently of other components in the analysis system for a communication with a control instance, like a PC or a handheld device. Apart from the contribution of a specific function to the analysis to be performed by the analysis system, such a hosting module may also provide the capability to drive or control operation of a dependent, hosted module which, when taken alone, may or may not have a separate capability of being visible in the network as an independent node. Therefore, the hosted module may have the capability to make a control device (or any other module of the analysis system which controls at least a partial function of the analysis) believe that the corresponding hosted module (which may be a hosting module itself) is present as a separable drivable and controllable component in the analysis system. For this purpose, the hosting module may have some processing capability which is related to its communication with the control instance with regard to its own function, and may additionally comprise processing capability for interfacing a communication between the control device and the hosted module assigned to the hosting module. Commands from the control device which are intended to be transmitted to the hosting module may then be converted by the hosting module into a format or language which is understandable or interpretable even for the hosted module with its possibly reduced capabilities with regard to processing resources, storage resources, etc. Therefore, the hosting device may have the capability to recognize that a specific communication message from the control device is addressed to or intended for the hosted module. Therefore, the control device may communicate over a network with the non-self employed hosted module, since the hosting module may provide the functionality to recognize that such a message is addressed to the assigned hosted module and has a capability to convert the communication message to make it readable by the hosted module. On the other hand, when the hosted module sends a communication message to the control device, for instance for delivering analysis data, instructions, or other information, the hosting module may convert such a communication message into a format that the control device believes that an independently addressable and operable module is present and provides this data. Such a system may be operable in a real time mode allowing a fast operation of the analysis system.

By taking this measure, hosted modules in an analysis system may be provided with low computational capabilities, allowing to provide low cost devices. When devices having the hosting capability are present in such a network, this capability can be shared at least partially by the hosted module so as to make the hosted module to appear as a separate module in the analysis system.

The hosting module may be provided in such a manner so as to be capable to provide its function to the analysis in a network for a unidirectional or bidirectional communication with the control device and, additionally, may be capable of hosting one or more other modules. This may result in an efficient usage of available processing and storage capabilities.

Embodiments of the analysis system according to the first aspect may be implemented in a measurement apparatus, which further comprises a tower of individually combinable modules (like a sampler, a detector, a pump, a thermostatic oven, a fractioner, etc., of a life science system). Therefore, each of the modules may be individually added by a user so as to define a user-specific modular analysis system, for instance a modular high performance liquid chromatography apparatus.

In such a scenario, it may be necessary that the individual modules, for providing the entire analysis functionality, communicate with each other (for instance in order to adjust a timing of the individual modules in the context of a specific measurement orto execute a predefined analysis scheme or routine). Forthis purpose, a control device (for instance like a computer or a handheld device) may communicate in a network with a plurality of such modules. Possible formats for such a network communication are CAN (controller area network), RS232, LAN, etc. This communication may be bidirectional, so that the control device may provide the individual modules with control commands, and may further receive (directly or indirectly) analysis data or other data from each of the modules.

In a conventional configuration of an analysis system not falling under the claimed analysis system, each of the modules of the analysis system may be an individual node in the network (for instance in the LAN), and all modules may be equal in the network. This however may have the disadvantage that each module requires a high software/hardware effort, in order to be able to operate as a full value module. In such a conventional approach, a core portion is necessary in each of the modules which may be provided identically or similar for each of the modules so that such a core region provides the network capability independently from any other instances in the network.

However, the claimed analysis system may allow to provide cheaper modules, since - in addition to full-performance modules - virtual modules may be connected to a bus or any other network, and such virtual modules may be of less value and capability than a full value module so that a non-full value module may use free processing and/or memory capabilities of a core of a full value module. Therefore, a network formed of full value and non-full value modules may be flexibly established and defined, wherein hosting modules (like a detector, a sampler, a pump) with relatively high resources are adapted to upgrade a non-full value module (for instance a simple valve) so as to appear (in the network) to a control device as an individual and individually addressable module. Therefore, a network formed of a control device, equal modules and non-equal modules may be provided, wherein the equal modules may tune or upgrade the performance of the non-equal modules so that the control device may see all modules in the network on the same level.

In other words, a module of a higher degree of functionality may be capable of recognizing a module of a lower degree of functionality and may give the control device the impression that also the module with the lower degree of functionality is a full value module. For this purpose, it may be advantageous that the hosting module is equipped with commands or operation instructions or other function-related data with regard to the hosted module, so that the data exchange between the control device and the hosted module is understandable for the hosting module.

In an embodiment of the claimed analysis system, a hosting module may have the capability to potentially host a plurality of different hosted modules (for instance different valve products of a manufacturer), so that a broad variety of data and instructions related to a large variety of different modules may be prestored in such a hosting module.

Each hosting module may be able to host one or more mini-modules, and/or can host one or more modules even if these modules have the full functionality and, in principle, would not require to be hosted in order to be operable separately in the network. Therefore, the hosted module may be a low performance module or may be a high performance module as well.

For the claimed analysis system, it is possible that modules which have been manufactured conventionally as full value modules may now be manufactured in a downgraded manner with a lower requirement of functionality, processing capabilities, size and costs. Therefore, a hierarchical modular system for an analysis device may be provided in which necessary core modules are provided in a full value module (for instance a detector), whereas optional auxiliary modules (for instance a valve) can be provided with reduced effort, cost, and size.

Furthermore, devices which are not related to a specific manufacturer of modules of an analysis system may be connected easily to the system, since their functionality can be upgraded to a level required for a full network capability by being hosted by a hosting module. For instance, a robot for handling well plates may be provided by a different manufacturer as compared to a manufacturer of the other analysis components of a HPLC (High Performance Liquid Chromatography) system. Such a robotic unit may be simply connected to the analysis system since it can be hosted by one of the hosting modules having the capability to do this. For this purpose, an available hosting module may search actively for unhosted modules in the network, and when detecting the presence of an unhosted module, it may host the unhosted module to enable this foreign component to be integrated in the network. Thus, a new component may simply be plugged to the network, and the network may automatically be reconfigured to use also the additionally connected component.

In a conventional analysis system not falling under the claimed analysis system, each of the modules may comprise a non-specific portion, a so-called "core", which allows a communication of the module with other modules via CAN, and with a controller via LAN or CAN. Furthermore, some synchronizing function (timing) may be provided in such a core. Additionally, each of the conventional modules may have a module-specific function (for instance defining how a pump moves a piston, a manner in which a detector detects, etc.).

Contrary to this, in the claimed analysis system, such cores may be provided a plurality of times, that is to say redundantly, in a hosting module. Therefore, when a hosting module is operated in an analysis system, only a part of the available cores may be used for the communication with the control device, and other core portions of the hosting module may be used to host a mini-module.

Each of such core regions may be implemented in software (allowing to provide a corresponding hardware unit, for instance the electric circuitry, only once in a hosting module). Alternatively, such cores may also be provided in hardware (so that the same or a similar hardware component is provided a plurality of times). Different cores of a hosting module may be operable in a separate and individual manner.

In order to be addressable in a network, the additional cores of a hosting module may allocate or assign node addresses to the connected hosted modules, in order to define addresses for network communication. A control device may then send a communication message to the network addressing specifically such a hosted module, and the corresponding hosting module will recognize that this communication message is intended to be sent to the respectively hosted module, and may then convey the communication message to the addressed hosted module.

For establishing a communication network, it is possible that a dependently operable module (that is to say a hostable module which has been added to the network) sends a message on a network path (for instance a CAN) indicating its presence in the network and indicating that it desires to be hosted by an available hosting module. Such a communication message may be received by an available hosting module (for instance by the core thereof), and then the communication interface function of the hosting module for intermediating communication messages between controller device and hosting module may be established. Therefore, when a hosting module is free and capable to host a hosted module, the hosting module may send a confirmation message to the requesting hosted module. Then, it is possible that the hosted module (for instance a valve) identifies itself to the hosting module so that the cores of the hosting modules can decide whether it is possible to host this specific hosted module or not. If this is the case, the hosting module will, in the future, host the hosted module.

The hosting modules may have the capability of providing an interrogator scheme, a raw data provision capability, a diagnosis function capability, a capability of generating an event, and/or a user-defined programming capability. One or more of such capabilities may lack in a hosted module.

It may be advantageous that a hosting module (which may also be denoted as a networking module) stores operation data with regard to different potentially connectable hosted modules (for instance commands with regard as to how the hosting module shall send requests to the hosted module). This may allow to provide a multipurpose hosting module.

In a scenario in which a hosted module sends a broadcasting signal asking whether there is any hosting module available which is capable and willing to host the hosted module, it may happen that a plurality of hosting modules are available for hosting the hosted module. In such a scenario, the decision which of the hosting modules hosts the hosted module may be taken on the basis of at least one (predefined) criteria of the group consisting of the CPU burden of the available hosting modules, a memory burden of the available hosting modules, a number of already controlled hosted modules for each of the potentially available hosting modules, or a "first come, first served" criteria.

The hosted module may be a module which lacks the capability of being operated in the network alone, may be a foreign module (for instance a module provided by a different manufacturer), may be a module which does not have the capability of being operated in accordance with the other modules of the analysis system, may be a module of a former product generation or line of products in which the communication over the analysis network has not yet been implemented, or can be a module which in principle has the capabilities to be operated separately in the analysis network, but shall not be operated independently in a specific scenario.

It is possible that the modules perform an analysis together and without an interaction with the controller. For this purpose, they may communicate with one another, for instance to agree about a timing scheme, or to coordinate complex procedures. For example, a sample may be automatically separated into its components. For this purpose, the detector detecting the individual components may communicate with an automatic fractioner which may collect the components. The hosting module may help the hosted module to have the necessary capabilities to be addressable by other modules (not only by the controller) as a full-performance or adequate module.

It is also possible that a hosted module does not have a separate processor but is simply a hardware-extension for an existing module, and which may appear as a separate complete module in combination with the existing module.

The hosted module may also store or comprise a program (code) and/or data necessary for being hostable by a hosting module. If desired or needed for hosting, the hosted module may then supply the program/data to the hosting module, for example by using a generic mechanism. This may allow a hosting module to host essentially any desired hosted module, even when such a hosted module is not yet known by the hosting module before the download of the function-specific program (code) has occurred.

The hosting module may comprise a plurality of hosted module processing units each adapted for communicating with the control device and with a respective one of a plurality of hosted modules with respect to a respective function of the respective one of the plurality of hosted modules. Such a scenario may cover one hosting module hosting a plurality of connected hosted modules. Therefore, the hosting capability of the hosting module is not restricted to a single hosted module, but can be extended to two, three, four or even more hosted modules.

The hosted module processing unit and the hosting module processing unit may be different software processes executable by a single physical hardware component. For instance, a single microprocessor or CPU (central processing unit) may be provided, and different software applications may run on this individual processor (simultaneously and/or sequentially) to provide the different core portions necessary for operating the communication between the control device and the hosting device, and the communication between hosting device on the one hand and control device and hosted device on the other hand.

Alternatively, the hosted module processing unit and the hosting module processing unit may be physically different hardware components. In such a scenario, the hosted module processing unit and the hosting module processing unit may be adapted as two different microprocessors or CPUs.

Different ones of the plurality of hosted module processing units may be operable separately from one another. Therefore, it is possible to host a plurality of hosted modules simultaneously with different core regions of a hosting module, increasing the flexibility of such a system.

The hosted module processing unit may be adapted for communicating with a control device with respect to a function of the hosted module of the group consisting of an interrogator-responder scheme (that is to say a scheme of sending requests and receiving responses), an analysis data transmission scheme (that is to say a scheme of transmitting analysis data captured or measured during the analysis), an analysis data evaluation scheme (that is to say a scheme of processing received data so as to derive abstract information therefrom), a diagnosis function (for instance in the event of a failure of one or more modules of the analysis system so as to recognize where the problem has occurred and how the problem can be solved), an event trigger function (for instance triggering a specific measurement or analysis mode, etc.), and a user-defined programming capability (that is to say a programming capability input by a human user via an input/output device).

The hosted module processing unit may be adapted for providing a function of a plurality of potentially supportable types of hosted modules. For instance, when a detector module shall host a plurality of valves, a number of typical valves to be connected in such an analysis system may be considered for designing the hosted module processing unit. Namely, the function of different possibly connectable hosted modules and corresponding operation data may be stored in a memory device assigned to the hosted module processing unit, so that the hosting module is flexibly able to host a plurality of different hosted modules.

The hosting module may be adapted to communicate with at least one of the group consisting of the control device and the hosted module via at least one of a bus (for instance a field bus, a Profibus, etc.), a local area system (for instance a LAN, local area network, particularly a WLAN, wireless local area network), a controller area system (CAN), the Internet (that is to say the public Internet or an Intranet, for instance of a company), HPIB, and RS232. However, these networks are only exemplary and can be substituted by any other appropriate network.

The hosting module may comprise at least one of the group consisting of a sampler module for providing a sample to by analyzed by the analysis system (for instance in the context of a liquid chromatography apparatus, for providing a liquid sample), a detector module for performing a detection in the analysis system (for instance in the case of a liquid chromatography apparatus, a fluid separation detector for separating different fractions of the fluidic sample, possibly connected to a mass spectroscopy device; in the example of gel electrophoresis, an optical detection unit), a pump module for pumping the fluid in the analysis system (for instance in the scenario of a liquid chromatography apparatus, a micropump for pumping a fluidic sample through a liquid chromatography column), a thermostat module for adjusting a temperature in the analysis system (for instance in a liquid chromatography apparatus, a temperature control unit for controlling the temperature of the fluidic sample passing one or more separation columns), and a fractioner module for fractioning at least one component of a fluidic sample in the analysis system (that is to say a component located downstream of a fluid separation element like a chromatographic column capable of providing one or more different fractions of a fluidic sample).

The hosted module processing unit may be adapted for communicating with the control device in such a manner that the hosted module appears to the control device as an autonomous network node in the analysis system. In other words, for any other network node of the analysis system, it is possible to address communication messages to the non-autonomous hosted module, since the assigned hosting module may convey (or convert) such a communication message addressed to the hosted module.

The hosting module may comprise a hosted module recognition unit adapted for recognizing an unhosted hostable module in the analysis system and for establishing a functional coupling with the unhosted hostable module. Therefore, the hosted module recognition unit may recognize that there is a non-autonomous module present in the system which needs to be hosted to be addressable by the control device. Such a detection may be performed by the hosted module recognition unit in an active manner, by sending a corresponding query to the network and listening whether a potentially hosted module sends a response to this request. Alternatively, it is possible that the hosted module recognition unit is adapted in a passive manner so as to listen on the communication network whether a broadcasting signal may be received from an unhosted hostable module including a query whether a hosting module capable of hosting the module to be hosted is present in the analysis system. After verification that the hosted module recognition unit is capable of hosting the hosted module, the hosting module may then start hosting the hosted module. For instance, such a broadcasting signal may be broadcasted unspecifically by an unhosted hostable module onto the network, hoping that a hosting modules receives such a broadcasting signal and sends a positive reply.

The hosted module processing unit may be adapted for communicating with the control device and with a further hosting module with respect to a function of the further hosting module in the analysis system to thereby host the further hosting module. In other words, it is not necessary that a hosting module necessarily hosts a module lacking capability to be operable independently on the network, but it is also possible, if required, to provide the interface or translation capability between the control device and an assigned module when the assigned module in principle has the hosting capabilities and the capabilities to be operable independently or autonomously on the network.

The hosted module processing unit may be adapted for assigning an identifier to the hosted module for (uniquely) identifying the hosted module in the analysis system. Such an identifier may be an address allowing to unambiguously send a communication message to a specific hosted module in the communication network. Then, the hosting module may receive such a communication message and may understand that the communication message is addressed to the hosted module, allowing the hosting module to transmit the corresponding communication message, if required after signal transformation or signal processing, to the hosted module.

The hosting module may further comprise a control device interface adapted for communicating between the hosting module and the control device, and may comprise a hosted module interface adapted for communicating between the hosting module and the hosted module. According to one embodiment, the control device interface and the hosted module interface are decoupled from one another (in such a scenario the two interfaces may be coupled to different non-directly coupled networks). According to another exemplary embodiment, the control device interface and the hosted module interface may be coupled to one another. In such an embodiment, it is possible to provide the communication between control device and hosting module on the one hand and the communication between hosting module and hosted module on the other hand within a single shared network.

In the following, exemplary embodiments of the hosted module will be explained.

The hosted module may be free of a capability of directly communicating with a control device with respect to the function of the hosted module in the analysis system. Consequently, the hosted module may be manufactured with low cost and in a small size, since the processing capabilities of the assigned hosting module can be used as well by the hosted module.

The hosted module may be adapted to communicate with a hosting module via at least one of a bus, a local area network, a controller area network, the Internet, HPIB, and RS232.

The hosted module may be adapted as at least one of the group consisting of a valve module for controlling fluid communication in the analysis system (in the context of a liquid chromatography system, a valve for allowing or preventing a fluid communication through a conduit), a robot module for operating a component in the analysis system (in the context of a liquid chromatography apparatus, a robot module for mechanically handling well plates), and a cooling module for cooling a component in the analysis system (for instance a Peltier cooling element provided in a liquid chromatography apparatus).

The hosted module may comprise a hosting initiation unit adapted for initiating a functional coupling with a hosting module. Therefore, the local communication between hosted module and hosting module (for example with the hosting module being a master and the hosted module being a slave) may be initiated by the hosted module, for instance by transmitting a broadcasting signal to the analysis system including a query whether a hosting module capable of hosting the hosted module is present in the analysis system. The hosted module may further be adapted to receive a response signal in response to such a broadcasting signal which response signal may be provided by a hosting module capable and willing and available to host the hosted module.

In the following, further exemplary embodiments of the analysis system will be explained.

The analysis system may comprise a control device, which may comprise at least one of the group consisting of a computer and a handheld device detachably connectable to the analysis system (in a wired or wireless manner). Such a control device may be adapted as workstation or any other computer. In the context of this description, a "computer" may denote any instance which can be communicatively connected to an analysis device which may receive and/or process data. For instance, such a computer can be a conventional personal computer, can be a laptop, or can also be a server computer. In principle, the computer can also be mobile phone, a personal digital assistant (PDA) or any device which allows control of the analysis device. Also some kind of remote control unit may be usable as a computer or controller device.

The control device may comprise a graphical user interface (GUI). Such a graphical user interface may include a display device (like a cathode ray tube, a liquid crystal display, a plasma display device or the like) for displaying information to a human operator, like analysis data or analysis results derived from the analysis data by further processing in the computer. Moreover, a graphical user interface may comprise an input device allowing a user to input data (like commands or instructions) or to provide the system with the data. Such an input device may include a USB port, a keypad, a joystick, a trackball, or may even be a microphone of a voice recognition system. The GUI may allow a human user to communicate in a bidirectional manner with the workstation.

The control device and the hosting module may be adapted for communicating to coordinate the functions of the hosting module and the hosted modules in the analysis system. For instance, a timing between the individual modules may be synchronized or harmonized so as to allow proper operation of the analysis system.

The analysis system comprises a plurality of hosting modules capable of hosting a hosted module, wherein one of the plurality of hosting modules is selectable for hosting a hosted module, wherein the selection may be based on at least one criteria of the group consisting of an actual processing workload of the plurality of hosting modules (for instance, the least busy hosting module may be selected to host a hosted module to efficiently distribute the computational burden among the modules of the analysis system), an actual memory workload of the plurality of hosting modules (for instance, the hosting module may be selected to host a hosted module which has the highest amount of free memory resources, for instance of a mass storage device and/or of a cache storage device), and a number of hosted modules already hosted by respective ones of the plurality of hosting modules (for instance, the hosting module may be selected to host a hosted module which has the smallest number of already hosted devices among all available hosting devices). Therefore, one or a plurality of these or other criteria may be combined to determine which of a number of available hosting modules shall indeed host a hosted module. However, also a "first come, first served" principle may be applied so that the first hosting module answering to a broadcasting signal of a hosted module indicating that it desires to be hosted will perform the hosting service.

As stated above, the analysis system may be adapted as a measurement device for performing a measurement in a coupled measurement environment, a measurement device for measuring at least one physical, chemical or biological parameter, a measurement device for performing a measurement of a fluidic sample, a sensor device, a device for chemical, biological and/or pharmaceutical analysis, a fluid separation system adapted for separating components of a fluid, a test device for testing a device under test or a substance, a capillary electrophoresis device, a liquid chromatography device, a gas chromatography device, an electronic measurement device, a mass spectroscopy device, and a life science apparatus.

Such a life science apparatus may be adapted to analyze at least one physical, chemical and/or biological parameter of at least one component of a sample. The term "physical parameter" may particularly denote a size or a temperature of the sample. The term "chemical parameter" may particularly denote a concentration of a fraction of the sample, an affinity parameter, or the like. The term "biological parameter" may particularly denote a concentration of a protein, a gene or the like in a biochemical solution, a biological activity of a component, etc.

### BRIEF DESCRIPTION OF DRAWINGS

Other objects and many of the attendant advantages of embodiments of the claimed analysis system and/or of the claimed method of operating such an analytical system will be readily appreciated and become better understood by reference to the following more detailed description of embodiments in connection with the accompanied drawings. Features that are substantially or functionally equal or similar will be referred to by the same reference signs.
Fig. 1 illustrates an embodiment of analysis system.
Fig. 2 illustrates an embodiment of a module of the analysis system of Fig. 1.
Fig. 3 to Fig. 7 illustrate analysis systems according to further embodiments.

The illustrations in the drawings are schematically.

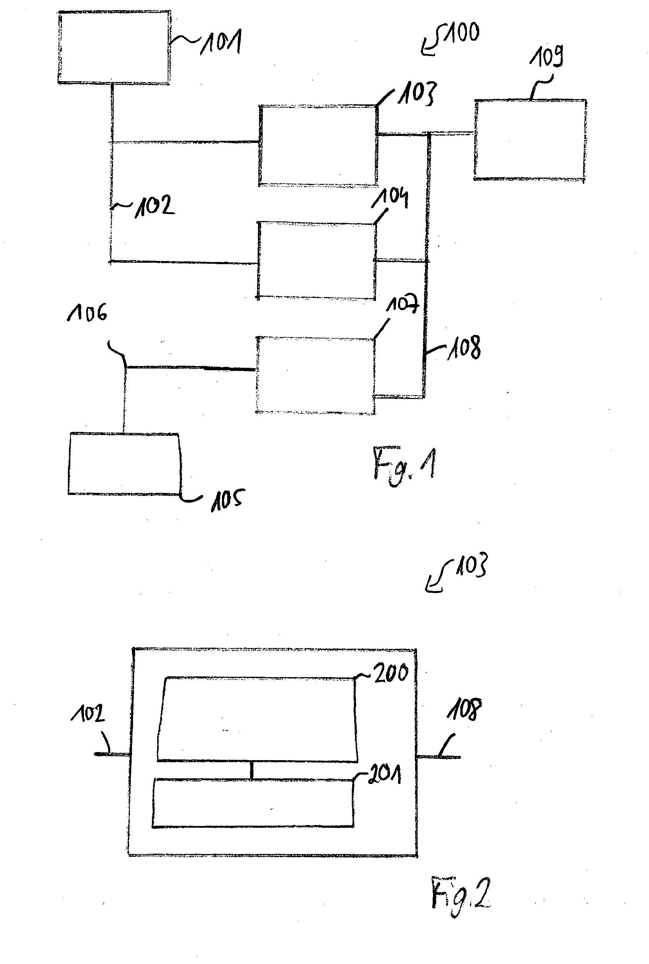

In the following, referring to **Fig. 1****,** an embodiment of an analysis system 100 will be explained.

The analysis system 100 of Fig. 1 is an analysis system in the context of a HPLC (High Performance Liquid Chromatography) application.

The analysis system 100 comprises a personal computer (PC) 101 as a control device which communicates via a LAN (local area network) 102 with a detector module 103 and a sampler module 104. Furthermore, a second personal computer (PC) 105 is provided as a further control device which communicates via an RS232 communication path 106 with a pump 107. Furthermore, the detector module 103, the sampler module 104 and the pump module 107 may communicate via a CAN network (controller area network) 108 with a handheld device 109 as a further control device.

In the system of Fig. 1, each of the modules 103, 104, 107 of the analysis system 100 needs to have the full capability to be operable in the networks 102, 106, 108, respectively. Therefore, it may be expensive to manufacture each of the components 103, 104, 107 having each the full capability of networking.

**Fig. 2** shows the detector module 103 in more detail.

The detector module 103 comprises a core portion 200 and a module-specific portion 201. Each of the modules 103, 104, 107 comprises an identical core unit 200 allowing to provide the networking capability to operate and communicate in the networks 102, 108, 106, respectively. Additionally, each of the modules 103, 104, 107 comprises a separate individual module-specific unit 201 which differs for each of the modules 103, 104, 107 and provides the module specific function (detection, sampling, pumping). For instance, in the case of the detector module 103, this module-specific unit 201 includes all the detecting capabilities needed in the analysis system 100.

Therefore, the system of Fig. 1 and Fig. 2 may need a high hardware effort, since the core unit 200 has to be provided individually in each of the modules 103, 104, 107.

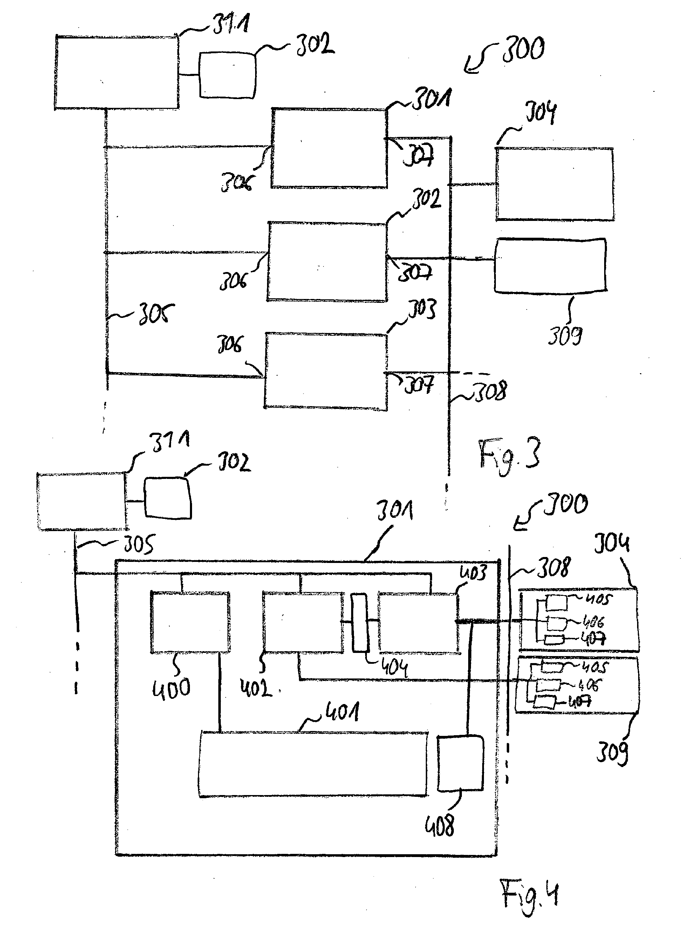

In the following, referring to Fig. 3, another embodiment of an analysis system 300 will be explained.

The analysis system 300 of Fig. 3 is a High Performance Liquid Chromatography (HPLC) apparatus with a modular structure for performing a liquid chromatography analysis. The apparatus of Fig. 3 may build up on a 1100 Series HPLC of Agilent Technologies.

The analysis system 300 comprises a control device 311, namely a personal computer 311, which may be controlled by a human user using a connected input/output device 302. Therefore, a bidirectional communication between the control device 311 and the input/output device 302 is possible.

As an alternative to the personal computer 311, a handheld device may be connected detachably to the system 300 to control the operation of the interconnected elements which will be described in the following in more detail.

As can further be seen in Fig. 3, the analysis system 300 comprises a detector unit 301 as a first hosting module, a sampler unit 302 as a second hosting module, and a pump unit 303 as a third hosting module. Beyond this, a first valve unit 304 is connected to the analysis system 300 as a first hosted module which is hosted by any one of the first to third hosting modules 301 to 303. Moreover, a second valve unit 309 is connected to the analysis system 300 as a second hosted module which is hosted by any one of the first to third hosting modules 301 to 303. As can further be taken from Fig. 3, the further valve unit 309 is provided and may also be operated within the network 300 only in a dependent manner, that is to say assisted or hosted by one of the hosting devices 301 to 303.

Each of the hosting modules 301 to 303 is adapted for hosting the hosted module 304 and for hosting the hosted module 309 in the analysis system 300. Therefore, each of the hosting modules 301 to 303 has the capability to bidirectionally communicate with the control device 311 via a LAN network 305 (local area network). For this purpose, each of the hosting modules 301 to 303 comprises a control device interface unit 306. Additionally, each of the hosting devices 301 to 303 comprises a hosted module interface 307 which is connected or connectable via a CAN (control area network) 308 with the hosted modules 304, 309.

In the HPLC analysis system 300, each of the modules 301 to 304, 309 fulfills a specific function. The detector 301 performs a detection of fluid fractions separated with the HPLC device 300. The sampler unit 302 is capable of providing a sample to the system. The pump 303 is able to pump a fluidic sample through one or more fluid separation columns (not shown) of the liquid chromatography apparatus 300. The first valve unit 304 is able to selectively open or close fluid communication paths of the fluidic sample passing through conduits and/or separation columns of the liquid chromatography apparatus 300. Also the second valve unit 309 is able to selectively open or close fluid communication paths of the fluidic sample passing through conduits and/or separation columns of the liquid chromatography apparatus 300.

In the context of such an operation, the control device 311 controls and coordinates the function of each of the modular units 301 to 304 by providing control commands via the LAN network 305 to the units 301 to 303. In order to provide control commands to the non-autonomous valve units 304, 309, anyone of the hosting modules 301 to 303 has to host the respective hosted module 304, 309 in a manner as will be explained below in more detail.

On the other hand, data generated and/or received by any one of the units 301 to 303 can be transmitted to the control device 311 via the LAN network 305. Data generated by the non-autonomous modules 304, 309 may be transmitted via the CAN 308 to a hosting one of the three hosting modules 301 to 303, which may re-format such data and provide this data in a format interpretable by the control device 311 via the LAN network 305.

Particularly, the communication via the LAN network 305 and the CAN network 308 may allow to coordinate a timing and/or a performance of the modules 301 to 304, 309 during a liquid chromatography experiment.

**Fig. 4** shows a portion of the analysis apparatus 300 of Fig. 3 in further detail.

In the following, referring to Fig. 4, the internal structure of the detector module 301 will be explained in more detail. However, the internal construction of the sampler unit 302 and the pump 303 as further hosting modules may be, at least in parts, similar to that of the detector unit 301.

The first hosting module 301 comprises a hosting module processing unit 400 adapted for communicating with the control device 311 with respect to the detector function of the detector unit 301 in the analysis system 300. The hosting module processing unit 400 has access to a hosting module function unit 401 which may be a memory device having stored data related to the detecting function of the detecting unit 301 and the analysis system 300. For instance, all data, instructions and information necessary for carrying out such a detection, as well as detection algorithms or the like, may be stored in this memory device 401.

Beyond this, a first hosted module processing unit 402 is foreseen in the detector module 301 and is adapted for communicating with the control device 311 and with the second valve unit 309 as a hosted module with respect to a function of the second valve unit 309 in the analysis system. In other words, the processor 402 may translate communication messages to be transmitted in a bidirectional manner between the control device 311 and the hosted module 309.

Moreover, a second hosted module processing unit 403 is provided in the detector module 301 for communicating with the control device 311 and with the hosted module 304 (the first valve unit 304) with respect to a function of the first valve unit 304 in the analysis system 300.

The individual cores 400, 402, 403 may be provided as a single microprocessor on which different software applications 400, 402, 403 are running, or may be implemented alternatively as three different hardware modules. It is also possible that the cores 402, 403 are grouped and are executed on a single common processor, whereas the core 400 is provided on a separate processor.

In the network 305, 308, the valves 304, 309 are, when operated alone, not addressable individually, since no cores are foreseen in the valve units 304, 309 allowing such a capability. Therefore, the first hosted module processing unit 402 is adapted for communicating with the control device 311 in such a manner that the first hosted module 309 appears to the control device 311 as an autonomous network node in the analysis system 300. In other words, when a communication message is to be sent to the second valve unit 309 over one of the networks 305, 308, the second core unit 402 will recognize that this communication message shall be transmitted to the second valve unit 309, and reconverts the signal and supplies the signal to the second valve unit 309. Similarly, when a communication message is intended to be sent to the first valve unit 304, the second core unit 403 reconverts a corresponding message so as to deliver this message to the first valve unit 304.

In order to be capable to convert the messages, a memory unit 404 is provided and coupled to the hosted module processing units 402, 403. In this memory 404, information with regard to a plurality of hostable devices which can be potentially hosted by the detector unit 301 are stored. For instance, different valve products and corresponding operation conditions, instructions and information are stored in the device 404. By accessing the memory 404, necessary information may be supplied to the hosted module processing units 402, 403 as to how to host the corresponding hosted modules 304, 309.

Comparing the internal structure of the detector unit 301 with the internal structure of the sampler unit 302 and the pump 303, the module-specific unit 401 is different for each of these devices 301 to 303 (having separate casings), whereas an individual one of the core units 400, 402, 403 can be same for the different hosting modules 301 to 303. However, the number of processing units 400,402,403 may differ for the individual hosting units 301 to 303.

Therefore, the cores 400, 402, 403 may be unspecific standard components which do not have to be individualized significantly for a specific module, and can therefore be implemented with low cost and small or no development effort in the modules 301 to 303. The individualization of the modules 301 to 303 occurs via the module-specific unit 401 which is designed in accordance with the specific function of the corresponding module 301 to 303 in the analysis system 300. Additionally, some kind of individualization may be performed via the memory 404 defining which modules to be hosted are supported by the respective hosting module 301 to 303.

Each of the hosted modules 304, 309 comprises a hosting module interface unit 405 for communicating with the corresponding hosting module 301 to 303 which is, in turn, adapted for communicating with the control device 311 with respect to a function of the hosted modules 304, 309 in the analysis system 300. Furthermore, a corresponding hosted module function unit 406 is provided in each of the hosted units 304,309 for providing the valve function of the corresponding hosted module 304,309 in the analysis system 300.

However, the hosted modules 304, 309 are free of any capability to directly communicate with the control device 311 with respect to the valve function of the hosted modules 304, 309 in the analysis system 300. In other words, only very basic processing capabilities need to be provided in the hosted modules 304, 309 which allows to manufacture these devices 304, 309 with low cost.

However, for initiating a communication with a hosting module 301, each of the hosted modules 304, 309 may comprise a hosted module initiation unit 407 for transmitting a broadcasting signal via the network 308 to the analysis system 300 including a query whether a hosting module 301 to 303 is capable and willing of hosting the corresponding hosted module 304, 309 present in the analysis system 300. Such a query may be received by a hosted module recognition unit 408 of the hosting module 301. The hosted module recognition unit 408 may then check whether one of the cores 402, 403 is free to host the corresponding hosted device 304 or 309. If this is the case, the hosted module recognition unit 408 sends a response signal via the network 308 addressed to the respective one of the hosted modules 304, 309. This response signal may indicate whether the hosting module 301 will host the corresponding hosted module 304, 309 or not.

In case of different hosting modules 301, 302, 303 being available for hosting one of the hosted modules 304, 309, different criteria may be applied for deciding which of the hosting devices 301 to 303 will be used for hosting. Such a criteria may include the rate of utilization of one of the hosting devices 301 to 303, that is the current computational burden of a respective one of the hosting devices 301 to 303.

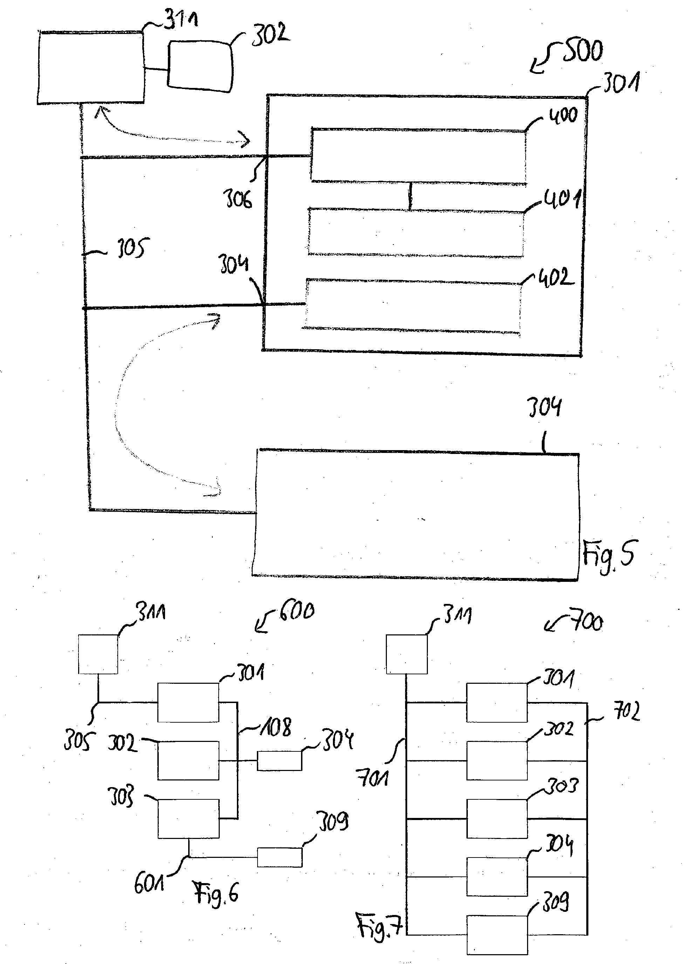

**Fig. 5** illustrates an embodiment of an analysis device 500 which differs from the analysis device 300 of Fig. 3 particularly in that the communication between the hosting module 301 and the hosted module 304 occurs via a single common shared network 305, instead of separating the networks for communication between the control device 311 and the hosting module 301 on the one hand and the communication between the hosting module 301 and the hosted module 304 on the other hand.

In the following, referring to **Fig. 6****,** an analysis system 600 according to a further embodiment will be explained.

Fig. 6 shows the electrical connections of the analysis system 600 of Fig. 6.

The analysis system 600 is similar to the analysis system 300. However, in Fig. 6, only the first hosted module 304 is a module of a series of a specific manufacturer (for example Agilent Technologies). In contrast to this, the second hosted module 309 is a module of another manufacturer. Nevertheless, also the second hosted module 309 can be hosted by any one of the hosting modules 301 to 303.

Reference numeral 601 indicates a USB/RS232 connection.

**Fig. 7** shows the logical connections 700 of the analysis system 600.

For the controller 311, the modules 301 to 304, 309 appear as nodes of the LAN network 701. From a module point of view, the modules 301 to 304, 309 are nodes of the CAN network 702.

## Claims

1. An analysis system (300) for performing an analysis and having a modular structure connected via a network in which individual modules interact so as to perform the analysis, the analysis system (300) comprising:
a hosted module (304) and a plurality of hosting modules (301-303), each module (301-304) having the capability of providing or contributing to a specific function to the analysis system (300), and
a further entity (311), which has the capability of monitoring or controlling or supervising a function or a partial function of the analysis system (300),
wherein
the hosted module (304) is not capable to serve as an independent network node in the analysis system (300),
each hosting module (301-303) has the capability to act as a master to enable the hosted module (304) to appear as an independent network node in the analysis system (300), in that each hosting module (301-303) comprises a hosted module processing unit (402) adapted for communicating with the further entity (311) and with the hosted module (304) with respect to the specific function of the hosted module (304) in the analysis system (300), and
one of the plurality of hosting modules (301 to 303) is selected for hosting the hosted module (304).

2. The analysis system (300) of claim 1, further comprising
a hosting module processing unit (400) adapted for communicating with the further entity (311) with respect to a function of the hosting module (301) in the analysis system (300); and
a hosting module function unit (401) adapted for providing the function of the hosting module (301) in the analysis system (300).

3. The analysis system (300) of claim 1 or 2, wherein:
the further entity of the analysis system (300) is at least one of the group consisting of a control device (311) for controlling the hosting module (301) and the hosted module (304), a further hosting module, and a further hosted module;
the hosted module processing unit (402, 403) is adapted for providing a function of a plurality of potentially supportable types of hosted modules (304, 309); and
the hosted module processing unit (402) is adapted for assigning an identifier to the hosted module (304) for identifying the hosted module (304) in the analysis system (300).

4. The analysis system (300) of any one of the claims 1 to 3, further comprising:
a hosted module recognition unit (408) adapted for recognizing an unhosted hostable module (304, 309) in the analysis system (300) and for establishing a functional coupling with the unhosted hostable module (304, 309).

5. The analysis system (300) of claim 4,
wherein the hosted module recognition unit (408) is adapted for establishing the functional coupling with the unhosted hostable module (304, 309) upon receipt of a broadcasting signal from the unhosted hostable module (304, 309) including a query whether a hosting module (301 to 303) capable of hosting the hosted module (304, 309) is present in the analysis system (300), and after verification that the hosted module recognition unit (408) is capable of hosting the hosted module (304, 309).

6. The analysis system (300) of any one of the claims 1 to 5, wherein the hosted module processing unit (402) is adapted for at least one of the following features:
communicating with the further entity (311) with respect to a function of the hosted module (304) of the group consisting of an interrogator-responder scheme, an analysis data transmission scheme, an analysis data evaluation scheme, a diagnosis function, an event trigger function, and a user-defined programming capability; and
communicating with the further entity (311) and with an additional hosting module (302) with respect to a function of the additional hosting module (302) in the analysis system (300) to thereby host the additional hosting module (302).

7. The analysis system (300) of any one of the claims 1 to 6, wherein:
the hosting module (301) comprises a plurality of hosted module processing units (402, 403) each adapted for communicating with the control device (311) and with a respective one of a plurality of hosted modules (304, 309) with respect to a respective function of the respective one of the plurality of hosted modules (304, 309), wherein preferably different ones of the plurality of hosted module processing units (402, 403) are operable separately from one another;
the hosting module processing unit (400) is adapted for communicating with the further entity (311) with respect to a function of the hosting module (301) of the group consisting of an interrogator-responder scheme, an analysis data transmission scheme, an analysis data evaluation scheme, a diagnosis function, an event trigger function, and a user-defined programming capability;
the hosting module (301) comprises at least one of the group consisting of a sampler module (302) for providing a sample to by analyzed by the analysis system (300), a detector module (301) for performing a detection in the analysis system (300), a pump module (303) for pumping a fluid in the analysis system (300), a thermostat module for adjusting a temperature in the analysis system (300), and a fractioner module for fractioning at least one component of a fluidic sample in the analysis system (300); and
the hosting module (301) comprises a further entity interface (306) adapted for communicating between the hosting module (301) and the further entity (311), and comprising a hosted module interface (307) adapted for communicating between the hosting module (301) and the hosted module (304), wherein the further entity interface (306) and the hosted module interface (307) are either coupled to or decoupled from one another.

8. The analysis system (300) of any one of the claims 1 to 7, wherein:
the hosted module (304) comprises a hosting initiating unit (407) adapted for initiating a functional coupling with a hosting module (301), wherein preferably the hosting initiating unit (407) is adapted for transmitting a broadcasting signal to the analysis system (300) including a query whether a hosting module (301 to 303) capable of hosting the hosted module (304) is present in the analysis system (300).

9. The analysis system (300) of any one of the claims 1 to 8, wherein:
the hosted module (304) is adapted as at least one of the group consisting of a valve module (304, 309) for controlling fluid communication in the analysis system (300), a robot module for operating a component in the analysis system (300), and a cooling module for cooling a component in the analysis system (300).

10. The analysis system (300) of any one of the claims 1 to 9, wherein:
the further entity (311) is at least one of the group consisting of a control device (311) for controlling the hosting module (301) and the hosted module (304), a further hosting module, and a further hosted module.

11. The analysis system (300) of any one of the claims 1 to 10, wherein:
one of the plurality of hosting modules (301 to 303) is selected for hosting the hosted module (304) based on at least one criteria of the group consisting of an actual processing work-load of the plurality of hosting modules (301 to 303), an actual memory work-load of the plurality of hosting modules (301 to 303), a number of hosted modules (304, 309) already hosted by respective ones of the plurality of hosting modules (301 to 303), and a first come, first served criteria.

12. The analysis system (300) of any one of the claims 1 to 11, wherein:
the further entity is a control device (311) comprising at least one of the group consisting of a computer, and a handheld device detachably connectable to the analysis system (300);
the analysis system (300) is adapted as a measurement device for performing a measurement in a coupled measurement environment, a measurement device for measuring at least one physical, chemical or biological parameter, a measurement device for performing a measurement of a fluidic sample, a sensor device, a device for chemical, biological and/or pharmaceutical analysis, a fluid separation system adapted for separating compounds of a fluid, a test device for testing a device under test or a substance, a capillary electrophoresis device, a liquid chromatography device, a gas chromatography device, an electronic measurement device, and a mass spectroscopy device;
the further entity (311) and the hosting module (301) are adapted for communicating to coordinate the functions of the hosting module (301) and the hosted module (304) in the analysis system (300); and
the further entity (311) and the hosting module (301) are adapted for communicating to coordinate a timing of a performance of the hosting module (301) and the hosted module (304) in the analysis system (300).

13. A method of operating an analysis system (300) for performing an analysis,
the method comprising:
providing an analysis system (300) according to any one of the claims 1 to 12,
selecting one of the plurality of hosting modules (301 to 303) for hosting the hosted module (304), and
the selected hosting module (301-303) acting as a master to enable the hosted module (304) to appear as an independent network node in the analysis system, by communicating with the further entity (311) and with the hosted module (304) with respect to the specific function of the hosted module (304) in the analysis system (300).

14. The method of claim 13, further comprising:
communicating between the hosting module (301) and the further entity (311) with respect to a function of the hosting module (301) in the analysis system (300) provided by the hosting module (301);
the hosted module (304) initiating the communication with the hosting module (301) by transmitting a broadcasting signal to the analysis system (300) including a query whether a hosting module (301) capable of hosting the hosted module (304) is present in the analysis system (300);
the hosted module (304) initiating the communication with the hosting module (301) by transmitting a broadcasting signal to the analysis system (300) including a query whether a hosting module (301) capable of hosting the hosted module (304) is present in the analysis system (300), wherein the hosting module (301) establishes the functional coupling with the hosted module (304) upon receipt of the broadcasting signal, and after verifying that the hosting module (301) is capable of hosting the hosted module (304).

## Patentansprüche

1. Ein Analysesystem (300) zum Durchführen einer Analyse, und welches eine modulare Struktur hat, welche über ein Netzwerk verbunden ist, in welchem individuelle Module interagieren, um die Analyse durchzuführen, wobei das Analysesystem (300) aufweist:
ein gehostetes Modul (304) und eine Mehrzahl von Hosting Modulen (301-303), wobei jedes Modul (301-304) die Fähigkeit hat, dem Analysesystem (300) eine spezifische Funktion bereitzustellen oder zu der spezifischen Funktion beizutragen, und
eine weitere Entität (311), welche die Fähigkeit hat, eine Funktion oder eine partielle Funktion des Analysesystems (300) zu überwachen oder zu steuern oder zu beaufsichtigen,
wobei
das gehostete Modul (304) nicht fähig ist, als ein unabhängiger Netzwerkknoten in dem Analysesystem (300) zu dienen,
jedes Hosting Modul (301-303) die Fähigkeit hat, als ein Master zu wirken, um dem gehosteten Modul (304) zu ermöglichen, als ein unabhängiger Netzwerkknoten in dem Analysesystem (300) zu erscheinen, dadurch, dass jedes Hosting Modul (301-303) eine gehostetes Modul Verarbeitungseinheit (402) aufweist, welche eingerichtet ist zum Kommunizieren mit der weiteren Entität (311) und mit dem gehosteten Modul (304), in Bezug auf die spezifische Funktion des gehosteten Moduls (304) in dem Analysesystem (300), und
eines von der Mehrzahl von Hosting Modulen (301 bis 303) ausgewählt ist zum Hosten des gehosteten Moduls (304).

2. Das Analysesystem (300) gemäß Anspruch 1, ferner aufweisend
eine Hosting Modul Verarbeitungseinheit (400), welche eingerichtet ist zum Kommunizieren mit der weiteren Entität (311) in Bezug auf eine Funktion des Hosting Moduls (301) in dem Analysesystem (300); und
eine Hosting Modul Funktionseinheit (401), welche eingerichtet ist zum Bereitstellen der Funktion des Hosting Moduls (301) in dem Analysesystem (300).

3. Das Analysesystem (300) gemäß Anspruch 1 oder 2, wobei:
die weitere Entität des Analysesystems (300) zumindest eines aus der Gruppe ist, bestehend aus einer Steuervorrichtung (311) zum Steuern des Hosting Moduls (301) und des gehosteten Moduls (304), einem weiteren Hosting Modul, und einem weiteren gehosteten Modul;
die gehostetes Modul Verarbeitungseinheit (402, 403) eingerichtet ist zum Bereitstellen einer Funktion von einer Mehrzahl von potentiell unterstützbaren Typen von gehosteten Modulen (304, 309); und
die gehostetes Modul Verarbeitungseinheit (402) eingerichtet ist zum Zuordnen eines Identifizierers zu dem gehosteten Modul (304) zum Identifizieren des gehosteten Moduls (304) in dem Analysesystem (300).

4. Das Analysesystem (300) gemäß irgendeinem der Ansprüche 1 bis 3, ferner aufweisend:
eine gehostetes Modul Erkennungseinheit (408), welche eingerichtet ist zum Erkennen eines ungehosteten hostbaren Moduls (304, 309) in dem Analysesystem (300) und zum Etablieren eines funktionellen Koppelns mit dem ungehosteten hostbaren Modul (304, 309).

5. Das Analysesystem (300) gemäß Anspruch 4,
wobei die gehostetes Modul Erkennungseinheit (408) eingerichtet ist zum Etablieren des funktionellen Koppelns mit dem ungehosteten hostbaren Modul (304, 409) auf den Empfang eines Übertragungssignals hin von dem ungehosteten hostbaren Modul (304, 309), einschließlich einer Abfrage, ob ein Hosting Modul (301 bis 303), welches fähig zum Hosten des gehosteten Moduls (304, 309) ist, in dem Analysesystem (300) vorhanden ist, und nach einer Verifikation, dass die gehostetes Modul Erkennungseinheit (408) fähig zum Hosten des gehosteten Moduls (304, 309) ist.

6. Das Analysesystem (300) gemäß irgendeinem der Ansprüche 1 bis 5, wobei die gehostetes Modul Verarbeitungseinheit (402) eingerichtet ist zum zumindest eines der folgenden Merkmale:
Kommunizieren mit der weiteren Entität (311) in Bezug auf eine Funktion des gehosteten Moduls (304) aus der Gruppe bestehend aus einem Interrogator-Responder Schema, einem Analysedaten Übersendungsschema, einem Analysedaten Evaluationsschema, einer Diagnosefunktion, einer Event Triggerfunktion, und einer Nutzer-definierten Programmierfähigkeit; und
Kommunizieren mit der weiteren Entität (311) und mit einem zusätzlichen Hosting Modul (302) in Bezug auf eine Funktion des zusätzlichen Hosting Moduls (302) in dem Analysesystem (300), um dadurch das zusätzliche Hosting Modul (302) zu hosten.

7. Das Analysesystem (300) gemäß irgendeinem der Ansprüche 1 bis 6, wobei:
das Hosting Modul (301) eine Mehrzahl von gehostetes Modul Verarbeitungseinheiten (402, 403) aufweist, wobei jede eingerichtet ist zum Kommunizieren mit der Steuervorrichtung (311) und mit einem jeweiligen von der Mehrzahl von gehosteten Modulen (304, 309) in Bezug auf eine jeweilige Funktion des jeweiligen von der Mehrzahl von gehosteten Modulen (304, 309), wobei vorzugsweise verschiedene von der Mehrzahl von gehostetes Modul Verarbeitungseinheiten (402, 403) getrennt voneinander betreibbar sind;
die Hosting Modul Verarbeitungseinheit (400) eingerichtet ist zum Kommunizieren mit der weiteren Entität (311) in Bezug auf eine Funktion des Hosting Moduls (301) aus der Gruppe bestehend aus einem Interrogator-Responder Schema, einem Analysedaten Übersendungsschema, einem Analysedaten Evaluationsschema, einer Diagnosefunktion, einer Event Triggerfunktion, und einer Nutzer-definierten Programmierfähigkeit;
das Hosting Modul (301) zumindest eines aus der Gruppe auf weist, bestehend aus einem Sampier Modul (302) zum Bereitstellen einer Probe, welche mittels des Analysesystems (300) zu analysieren ist, einem Detektor Modul (301) zum Durchführen einer Detektion in dem Analysesystem (300), einem Pumpen Modul (303) zum Pumpen eines Fluids in dem Analysesystem (300), einem Thermostat Modul zum Einstellen einer Temperatur in dem Analysesystem (300), und einem Fraktionierer Modul zum Fraktionieren von zumindest einer Komponente einer fluidischen Probe in dem Analysesystem (300); und
das Hosting Modul (301) eine weitere Entitätsschnittstelle (306) aufweist, welche eingerichtet ist zum Kommunizieren zwischen dem Hosting Modul (301) und der weiteren Entität (311), und aufweisend eine gehostetes Modul Schnittstelle (307), welche eingerichtet ist zum Kommunizieren zwischen dem Hosting Modul (301) und dem gehosteten Modul (304), wobei die weitere Entitätsschnittstelle (306) und die gehostetes Modul Schnittstelle (307) entweder miteinander gekoppelt sind oder voneinander entkoppelt sind.

8. Das Analysesystem (300) gemäß irgendeinem der Ansprüche 1 bis 7, wobei:
das gehostete Modul (304) eine Hosting Initiieren Einheit (407) aufweist, welche eingerichtet ist zum Initiieren eines funktionellen Koppelns mit einem Hosting Modul (301), wobei vorzugsweise die Hosting Initiieren Einheit (407) eingerichtet ist zum Übersenden eines Übertragungssignals zu dem Analysesystem (300), einschließlich einer Abfrage, ob ein Hosting Modul (301 bis 303), welches fähig zum Hosten des gehosteten Moduls (304) ist, in dem Analysesystem (300) vorhanden ist.

9. Das Analysesystem (300) gemäß irgendeinem der Ansprüche 1 bis 8, wobei:
das gehostete Modul (304) eingerichtet ist als zumindest eines aus der Gruppe bestehend aus einem Ventil Modul (304, 309) zum Steuern einer Fluidverbindung in dem Analysesystem (300), einem Roboter Modul zum Betreiben einer Komponente in dem Analysesystem (300), und einem Kühlmodul zum Kühlen einer Komponente in dem Analysesystem (300).

10. Das Analysesystem (300) gemäß irgendeinem der Ansprüche 1 bis 9, wobei:
die weitere Entität (311) zumindest eines aus der Gruppe ist, bestehend aus einer Steuervorrichtung (311) zum Steuern des Hosting Moduls (301) und des gehosteten Moduls (304), einem weiteren Hosting Modul, und einem weiteren gehosteten Modul.

11. Das Analysesystem (300) gemäß irgendeinem der Ansprüche 1 bis 10, wobei:
eines von der Mehrzahl von Hosting Modulen (301 bis 303) ausgewählt ist zum Hosten des gehosteten Moduls (304) basierend auf zumindest einem Kriterium aus der Gruppe bestehend aus einer gegenwärtigen Verarbeitungsarbeitslast von der Mehrzahl von Hosting Modulen (301 bis 303), einer gegenwärtigen Speicher Arbeitslast von der Mehrzahl von Hosting Modulen (301 bis 303), einer Anzahl von gehosteten Modulen (304, 309), welche bereits mittels jeweiligen von der Mehrzahl von Hosting Modulen (301 bis 303) gehostet sind, und einem zuerst kommen, zuerst bedient werden Kriterium.

12. Das Analysesystem (300) gemäß irgendeinem der Ansprüche 1 bis 11, wobei:
die weitere Entität eine Steuervorrichtung (311) ist, aufweisend zumindest eines aus der Gruppe bestehend aus einem Computer und einer Handgerät Vorrichtung, welche lösbar mit dem Analysesystem (300) verbindbar ist;
das Analysesystem (300) eingerichtet ist als eine Messvorrichtung zum Durchführen einer Messung in einer gekoppelten Messumgebung, eine Messvorrichtung zum Messen von zumindest einem physikalischen, chemischen oder biologischen Parameter, eine Messvorrichtung zum Durchführen einer Messung einer fluidischen Probe, eine Sensorvorrichtung, eine Vorrichtung zur chemischen, biologischen und/oder pharmazeutischen Analyse, ein Fluidtrennsystem, welches eingerichtet ist zum Trennen von Komponenten eines Fluids, eine Prüfvorrichtung zum Prüfen einer zu prüfenden Vorrichtung oder eines Substrats, eine Kapillarelektrophorese Vorrichtung, eine Flüssigchromatographie Vorrichtung, eine Gaschromatographie Vorrichtung, eine elektronische Messvorrichtung, und eine Massenspektroskopie Vorrichtung;
die weitere Entität (311) und das Hosting Modul (301) zum Kommunizieren eingerichtet sind, um die Funktionen des Hosting Moduls (301) und des gehosteten Moduls (304) in dem Analysesystem (300) zu koordinieren; und
die weitere Entität (311) und das Hosting Modul (301) zum Kommunizieren eingerichtet sind, um eine Zeitabstimmung eines Durchführens des Hosting Moduls (301) und des gehosteten Moduls (304) in dem Analysesystem (300) zu koordinieren.

13. Ein Verfahren zum Betreiben eines Analysesystems (300) zum Durchführen einer Analyse, wobei das Verfahren aufweist:
Bereitstellen eines Analysesystems (300) gemäß irgendeinem der Ansprüche 1 bis 12,
Auswählen von einem von der Mehrzahl von Hosting Modulen (301 bis 303) zum Hosten des gehosteten Moduls (304), und
das ausgewählte Hosting Modul (301-303) wirkt als ein Master, um dem gehosteten Modul (304) zu ermöglichen, als ein unabhängiger Netzwerkknoten in dem Analysesystem zu erscheinen, mittels Kommunizierens mit der weiteren Entität (311) und mit dem gehosteten Modul (304) in Bezug auf die spezifische Funktion des gehosteten Moduls (304) in dem Analysesystem (300).

14. Das Verfahren gemäß Anspruch 13, ferner aufweisend:
Kommunizieren zwischen dem Hosting Modul (301) und der weiteren Entität (311) in Bezug auf eine Funktion des Hosting Moduls (301) in dem Analysesystem (300), welche mittels des Hosting Moduls (301) bereitgestellt wird;
das gehostete Modul (304) initiiert die Kommunikation mit dem Hosting Modul (301) mittels Übersendens eines Übertragungssignals zu dem Analysesystem (300), einschließlich einer Abfrage, ob ein Hosting Modul (301), welches fähig zum Hosten des gehosteten Moduls (304) ist, in dem Analysesystem (300) vorhanden ist;
das gehostete Modul (304) initiiert die Kommunikation mit dem Hosting Modul (301) mittels Übersendens eines Übertragungssignals zu dem Analysesystem (300), einschließlich einer Abfrage, ob ein Hosting Modul (301), welches fähig zum Hosten des gehosteten Moduls (304) ist, in dem Analysesystem (300) vorhanden ist, wobei das Hosting Modul (301) das funktionelle Koppeln mit dem gehosteten Modul (304) etabliert, auf einen Empfang des Übertragungssignals hin, und nach einem Verifizieren, dass das Hosting Modul (301) fähig ist, das gehostete Modul (304) zu hosten.

## Revendications

1. Système d'analyse (300) pour réaliser une analyse et ayant une structure modulaire connectée via un réseau dans lequel des modules individuels interagissent afin de réaliser l'analyse, le système d'analyse (300) comprenant :
un module hébergé (304) et une pluralité de modules hébergeurs (301-303), chaque module (301-304) ayant la capacité de fournir ou de contribuer à une fonction spécifique au système d'analyse (300), et
une autre entité (311), qui a la capacité de surveiller ou de commander ou de superviser une fonction ou une fonction partielle du système d'analyse (300),
dans lequel
le module hébergé (304) n'est pas capable de servir de noeud de réseau indépendant dans le système d'analyse (300),
chaque module hébergeur (301-303) a la capacité de jouer un rôle de maître pour permettre au module hébergé (304) d'apparaître comme un noeud de réseau indépendant dans le système d'analyse (300), étant donné que chaque module hébergeur (301-303) comprend une unité de traitement de module hébergé (402) adaptée pour communiquer avec l'autre entité (311) et avec le module hébergé (304) relativement à la fonction spécifique du module hébergé (304) dans le système d'analyse (300), et
un de la pluralité de modules hébergeurs (301 à 303) est sélectionné pour héberger le module hébergé (304).

2. Système d'analyse (300) selon la revendication 1, comprenant en outre
une unité de traitement de module hébergeur (400) adaptée pour communiquer avec l'autre entité (311) relativement à une fonction du module hébergeur (301) dans le système d'analyse (300) ; et
une unité de fonction de module hébergeur (401) adaptée pour fournir la fonction du module hébergeur (301) dans le système d'analyse (300).

3. Système d'analyse (300) selon la revendication 1 ou 2, dans lequel :
l'autre entité du système d'analyse (300) est au moins un du groupe consistant en un dispositif de commande (311) pour commander le module hébergeur (301) et le module hébergé (304), un autre module hébergeur, et un autre module hébergé ;
l'unité de traitement de module hébergé (402, 403) est adaptée pour fournir une fonction d'une pluralité de types potentiellement supportables de modules hébergés (304, 309) ; et
l'unité de traitement de module hébergé (402) est adaptée pour attribuer un identificateur au module hébergé (304) pour identifier le module hébergé (304) dans le système d'analyse (300).

4. Système d'analyse (300) selon l'une quelconque des revendications 1 à 3, comprenant en outre :
une unité de reconnaissance de module hébergé (408) adaptée pour reconnaître un module hébergeable non hébergé (304, 309) dans le système d'analyse (300) et pour établir un couplage fonctionnel avec le module hébergeable non hébergé (304, 309).

5. Système d'analyse (300) selon la revendication 4,
dans lequel l'unité de reconnaissance de module hébergé (408) est adaptée pour établir le couplage fonctionnel avec le module hébergeable non hébergé (304, 309) à la réception d'un signal de diffusion en provenance du module hébergeable non hébergé (304, 309) comprenant une interrogation sur le fait qu'un module hébergeur (301 à 303) capable d'héberger le module hébergé (304, 309) soit présent ou non dans le système d'analyse (300), et après vérification que l'unité de reconnaissance de module hébergé (408) est capable d'héberger le module hébergé (304, 309).

6. Système d'analyse (300) selon l'une quelconque des revendications 1 à 5, dans lequel l'unité de traitement de module hébergé (402) est adaptée pour au moins une des caractéristiques suivantes :
communiquer avec l'autre entité (311) relativement à une fonction du module hébergé (304) du groupe consistant en un schéma interrogateur-répondeur, un schéma de transmission de données d'analyse, un schéma d'évaluation de données d'analyse, une fonction de diagnostic, une fonction de déclenchement d'événement, et une capacité de programmation définie par l'utilisateur ; et
communiquer avec l'autre entité (311) et avec un module hébergeur additionnel (302) relativement à une fonction du module hébergeur additionnel (302) dans le système d'analyse (300) pour ainsi héberger le module hébergeur additionnel (302).

7. Système d'analyse (300) selon l'une quelconque des revendications 1 à 6, dans lequel :
le module hébergeur (301) comprend une pluralité d'unités de traitement de module hébergé (402, 403) dont chacune est adaptée pour communiquer avec le dispositif de commande (311) et avec un respectif parmi une pluralité de modules hébergés (304, 309) relativement à une fonction respective de celui respectif parmi la pluralité de modules hébergés (304, 309), dans lequel de préférence des différentes parmi la pluralité d'unités de traitement de module hébergé (402, 403) sont exploitables séparément les unes des autres ;
l'unité de traitement de module hébergeur (400) est adaptée pour communiquer avec l'autre entité (311) relativement à une fonction du module hébergeur (301) du groupe consistant en un schéma interrogateur-répondeur, un schéma de transmission de données d'analyse, un schéma d'évaluation de données d'analyse, une fonction de diagnostic, une fonction de déclenchement d'événement, et une capacité de programmation définie par l'utilisateur ;
le module hébergeur (301) comprend au moins un du groupe consistant en un module d'échantillonneur (302) pour fournir un échantillon devant être analysé par le système d'analyse (300), un module de détecteur (301) pour réaliser une détection dans le système d'analyse (300), un module de pompe (303) pour pomper un fluide dans le système d'analyse (300), un module de thermostat pour ajuster une température dans le système d'analyse (300), et un module fractionneur pour fractionner au moins un composant d'un échantillon fluidique dans le système d'analyse (300) ; et
le module hébergeur (301) comprend une interface d'autre entité (306) adaptée pour communiquer entre le module hébergeur (301) et l'autre entité (311), et comprenant une interface de module hébergé (307) adaptée pour communiquer entre le module hébergeur (301) et le module hébergé (304), dans lequel l'interface d'autre entité (306) et l'interface de module hébergé (307) sont soit couplées l'une à l'autre soit découplées l'une de l'autre.

8. Système d'analyse (300) selon l'une quelconque des revendications 1 à 7, dans lequel :
le module hébergé (304) comprend une unité d'initiation d'hébergement (407) adaptée pour initier un couplage fonctionnel avec un module hébergeur (301), dans lequel de préférence l'unité d'initiation d'hébergement (407) est adaptée pour transmettre un signal de diffusion au système d'analyse (300) comprenant une interrogation sur le fait qu'un module hébergeur (301 à 303) capable d'héberger le module hébergé (304) soit présent ou non dans le système d'analyse (300).

9. Système d'analyse (300) selon l'une quelconque des revendications 1 à 8, dans lequel :
le module hébergé (304) est adapté comme au moins un du groupe consistant en un module de valve (304, 309) pour commander la communication de fluide dans le système d'analyse (300), un module de robot pour exploiter un composant dans le système d'analyse (300), et un module de refroidissement pour refroidir un composant dans le système d'analyse (300).

10. Système d'analyse (300) selon l'une quelconque des revendications 1 à 9, dans lequel :
l'autre entité (311) est au moins un du groupe consistant en un dispositif de commande (311) pour commander le module hébergeur (301) et le module hébergé (304), un autre module hébergeur, et un autre module hébergé.

11. Système d'analyse (300) selon l'une quelconque des revendications 1 à 10, dans lequel :
un de la pluralité de modules hébergeurs (301 à 303) est sélectionné pour héberger le module hébergé (304) sur la base d'au moins un critère du groupe consistant en une charge de travail de traitement réelle de la pluralité de modules hébergeurs (301 à 303), une charge de travail de mémoire réelle de la pluralité de modules hébergeurs (301 à 303), un nombre de modules hébergés (304, 309) déjà hébergés par des respectifs parmi la pluralité de modules hébergeurs (301 à 303), et un critère premier arrivé, premier servi.

12. Système d'analyse (300) selon l'une quelconque des revendications 1 à 11, dans lequel :
l'autre entité est un dispositif de commande (311) comprenant au moins un du groupe consistant en un ordinateur, et un dispositif portatif connectable de manière amovible au système d'analyse (300) ;
le système d'analyse (300) est adapté comme un dispositif de mesure pour réaliser une mesure dans un environnement de mesure couplé, un dispositif de mesure pour mesurer au moins un paramètre physique, chimique ou biologique, un dispositif de mesure pour réaliser une mesure d'un échantillon fluidique, un dispositif de capteur, un dispositif pour une analyse chimique, biologique et/ou pharmaceutique, un système de séparation de fluide adapté pour séparer des composés d'un fluide, un dispositif de test pour tester un dispositif en cours de test ou une substance, un dispositif d'électrophorèse capillaire, un dispositif de chromatographie en phase liquide, un dispositif de chromatographie en phase gazeuse, un dispositif de mesure électronique, et un dispositif de spectroscopie de masse ;
l'autre entité (311) et le module hébergeur (301) sont adaptés pour communiquer afin de coordonner les fonctions du module hébergeur (301) et du module hébergé (304) dans le système d'analyse (300) ; et
l'autre entité (311) et le module hébergeur (301) sont adaptés pour communiquer afin de coordonner une synchronisation d'une performance du module hébergeur (301) et du module hébergé (304) dans le système d'analyse (300).

13. Procédé d'exploitation d'un système d'analyse (300) pour réaliser une analyse, le procédé comprenant :
la fourniture d'un système d'analyse (300) selon l'une quelconque des revendications 1 à 12,
la sélection d'un de la pluralité de modules hébergeurs (301 à 303) pour héberger le module hébergé (304), et
le module hébergeur sélectionné (301-303) jouant un rôle de maître pour permettre au module hébergé (304) d'apparaître comme un noeud de réseau indépendant dans le système d'analyse, en communiquant avec l'autre entité (311) et avec le module hébergé (304) relativement à la fonction spécifique du module hébergé (304) dans le système d'analyse (300).

14. Procédé selon la revendication 13, comprenant en outre :
la communication entre le module hébergeur (301) et l'autre entité (311) relativement à une fonction du module hébergeur (301) dans le système d'analyse (300) fournie par le module hébergeur (301) ;
le module hébergé (304) initiant la communication avec le module hébergeur (301) en transmettant un signal de diffusion au système d'analyse (300) comprenant une interrogation sur le fait qu'un module hébergeur (301) capable d'héberger le module hébergé (304) soit présent ou non dans le système d'analyse (300) ;
le module hébergé (304) initiant la communication avec le module hébergeur (301) en transmettant un signal de diffusion au système d'analyse (300) comprenant une interrogation sur le fait qu'un module hébergeur (301) capable d'héberger le module hébergé (304) soit présent ou non dans le système d'analyse (300), dans lequel le module hébergeur (301) établit le couplage fonctionnel avec le module hébergé (304) à la réception du signal de diffusion, et après vérification que le module hébergeur (301) est capable d'héberger le module hébergé (304).
